Europäisches Patentamt

European Patent Office

Office européen des brevets

(11) Publication number: **0 158 615**
**B1**

## (12) EUROPEAN PATENT SPECIFICATION

(45) Date of publication of patent specification: **26.10.88**

(21) Application number: **85850082.0**

(22) Date of filing: **08.03.85**

(51) Int. Cl.⁴: **B 66 F 9/065**, B 62 B 3/06

(54) Moving and lifting gear for goods and commodities.

(30) Priority: **08.03.84 FI 840957**

(43) Date of publication of application:
**16.10.85 Bulletin 85/42**

(45) Publication of the grant of the patent:
**26.10.88 Bulletin 88/43**

(84) Designated Contracting States:
**AT BE CH DE FR GB IT LI LU NL SE**

(56) References cited:
**DE-A-1 813 682**
**GB-A- 712 491**
**US-A-2 603 454**
**US-A-2 676 720**
**US-A-4 359 205**

(73) Proprietor: **Juvonen, Kari**
**Myllykylä**
**SF-32500 Oripää (FI)**

(73) Proprietor: **Bergström, Esa**
**Myllykylä**
**SF-32500 Oripää (FI)**

(72) Inventor: **Juvonen, Kari**
**Myllykylä**
**SF-32500 Oripää (FI)**
Inventor: **Bergström, Esa**
**Myllykylä**
**SF-32500 Oripää (FI)**

(74) Representative: **Ström, Tore et al**
**Ström & Gulliksson AB Studentgatan 1 P.O. Box 4188**
**S-203 13 Malmö (SE)**

Courier Press, Leamington Spa, England.

## Description

The loading platforms and pallets equipped with wheels used commonly in vans and trailers as aids in goods handling are usually so called rear platform lifters, which have been fixed to the rear of the car for lifting the pallets to the trunk. Another known method is to lift the pallets with various motor driven truck machines to the trunk. Various loading bridges designed for vans have also been used as aids. These can be either fixed or vertically adjustable loading bridges.

Various types of lifts provided with tackle gears and overhanging bars are used as aids in loading. These are usually hydraulically acting lifting gears fixed to the body of the car or various types of conveyor elevators and conveyor belts, which are used to move the pallets out of the trunk and into it.

US—A—2 676 720 has suggested a moving and lifting gear which could be attached under the platform of the van. The arrangement includes a body provided with wheels and a chassislike jib member situated above and supported by the body. During transportation the arrangement can be lifted vertically behind the side of the loading platform. The lower bars of the chassislike jib member have been pivotally connected from their lower parts to a lifting member. These member's pivotal connections are able to slide in a horizontal track. The upper bars have been pivotally connected from their upper ends to the jib and from their lower ends to the frame, where the pivotal connections are able to slide horizontally.

The loading and lifting gear suggested in US—A—2 603 454, which was used as basis for the first part of claim 1, consists of a complicated crank arm arrangement. In this case the lifting jibs of the arrangement have been connected pivotally to the centre and rear end of the platform. The upper part of the jibs have also been connected to the body. Extensions have been connected to the upper pivotal connections of the jibs, which extensions are inclined forward, when the loading platform is in its lowered position. A balancing bar has been placed between these extensions. The task of this balancing bar is to hold the loading platform in a lateral position during a lifting operation. The transportation member for the jib arrangement has been connected outside the trunk below the loading platform.

The biggest drawback in the presently used loading platforms or pallets equipped with wheels used in vans or trailers is the moving, lifting and lowering of the loaded platform. These drawbacks can be obviated slightly by the use of workforce, which results in less effective man hours. Using workforce also jeopardizes safety at work as the loaded pallet may be heavy. Of the known aids the so called rear platform lifters are well suited only for lifting purposes, but the drawback in them are high manufacturing and assembly costs which are a consequence of their complicated structure. The practical flexibility of the arrangement is limited because of its fixture to the vehicle.

The drawbacks of various trucks adapted for this purpose are their high manufacturing costs and relatively high weight and large outer dimensions, which result in difficulties during loading especially in such vans, where the backdoor often opens upwards. Taking the trucklifter along in the van's trunk during transportation would also require a suitable loading bridge or rear side lifter. A drawback is also that the truck lifter would require a practically unacceptable space of the trunk space.

Controllable loading platforms, lifting gears, jibs and conveyors are usually situated in large wall equiped freighter stations and warehouses of large wholesales. Thus a drawback is their unavailability especially at delivery points. The drawbacks of the arrangements mentioned in the first publication is that the lifting platform cannot be lowered properly and the arrangement is long compared to the lifting height that it can achieve. These drawbacks are due to the scissorslike structure of the arrangement. Moreover the lengthy structure requires space.

The structure shown in the second publication, where the jibs have been connected to the end and middle of the platform result in a large deviation of the pivotal connections. The deviation between the upper pivotal connections, attached also to the frame, have to be equal. This arrangement results in great height and length or width, which requires a practically unacceptable space. Moreover, it needs a separate lifting mechanism for lifting it into a van.

The drawbacks of the moving and lifting gear suggested in the specifications mentioned above are, inter alia their complicated and heavy construction, large space requirements, high manufacturing costs due to complicated structure and unsuitable structure for flexible goods handling.

The object of the invention is to obviate the drawbacks mentioned above. Especially the purpose of the invention is to provide a goods handling equipment which obviates the heavy working procedures occurring during storage and transportation and which can be easily situated into a van requiring only a minor space. The reader is referred to the claims in order to familiarise himself with the characteristic features of the invention.

The moving and lifting arrangement according to this invention comprises a moving and lifting member as well as a loading and transportation member. The moving and lifting arrangement includes a frame which is connected to forward projected trucklike frame bearing beams. To the ends of the frame bearing beams and the frame there has been attached at least three wheels of which at least one has been mounted pivotally. Pivoted lifting members have also been attached to the body, which with the aid of a power member lift and lower the platform attached to them. This part of the lifting and transportation member consists advantageously of two mainly straight beams, which have been rigidly connected to each other in an angle. In a modification of the invention the lifting members consist mainly of an arched beam construction.

The lifting members consist of at least two beamlike parts, namely, a lifting beam and a supporting beam. In one useful modification of the invention the arrangement includes one lifting beam and two supporting beams placed sidewise to the lifting beam. Thus the supporting beams act only as supports, while the lifting beam with the aid of a power member connected to it carries out the actual lifting duty. The connections between the lifting members, the frame and platform have been achieved by using three pairs of pivots. These three pairs of pivots are arranged in such a way that the axis of rotation of all the pivots never lie all on the same plane.

Therefore the structure of the moving and lifting member is sturdy in the lateral as well as vertical direction.

One structural modification includes another body member in the loading and transportation member, said member being attachable to a trailer, loading platform or likewise structure. The member includes a pivotally mounted bridge member, which can be turned vertically upwards. The bridge member comprises mainly of two bar- or beamlike projected parts at a distance apart from each other. Said parts include tracklike, hooklike or somehow projected clamp members to which the lifting platform can be supported.

The flexibility can be regarded as the most important advantage of the invention, because the same equipment can be used for fetching the goods items from warehouses and moving them to the vicinity of the van. After which they can be loaded on the loading and transportation member with which the pallet is easily moved into the trunk of the van. Then the moving and lifting member is clamped to the loading- and transportation member and is lifted to the trunk, where it is transported requiring only a minor space. At the delivery points the equipment is instantaneously ready for unloading. The arrangement is very advantageous in vans and trailers due to its lightness and small space requirements. Due to its simple and reliable structure as well as easy mountability it can be fixed cheaply into all known transportation vehicles.

A further advantage of the invention is as the other ends of the lifting members have been connected pivotally to the middle of the platform the opposite ends have been connected pivotally to the frame achieving a minimum distance of separation between the pivots, while allowing for the strength of the material.

A pivot support structure has been achieved by a so called balancing beam situated in the middle of the lifting members omitting the need of any extensions or otherwise complicated structures. These constructional features result in a more effective, simple and less space requiring structure, when compared with the prior art arrangements.

Another advantage of the equipment is also, that it can be adapted as well to sidewise or rearwise loadable vans or trailers. The arrangement is by no means limited to the model or type of the van, but is easily mountable and dismountable in a quick and advantageous manner to various van and platform structures, neither does it cause any changes in the primary structure of the object to which it has been fixed. The same arrangement is suited also for attachment onto various loading platforms. Moreover the equipment according to the invention does not need any outside energy source or power unit in order to operate as the whole operation takes place due to pumping, pushing and lifting movements requiring only a relatively small force.

In order to explain the invention in more detail reference is made to the accompanying drawings in which

Figure 1 shows a moving and lifting member according to this invention,

Figure 2 shows a lifting and transportation member according to this invention,

Figure 3 is a sideview of Figure 1,

Figure 4 shows an operational step, when using an equipment according to the invention,

Figure 5 shows another operational step, when using an equipment according to the invention,

Figure 6 shows a further operational step.

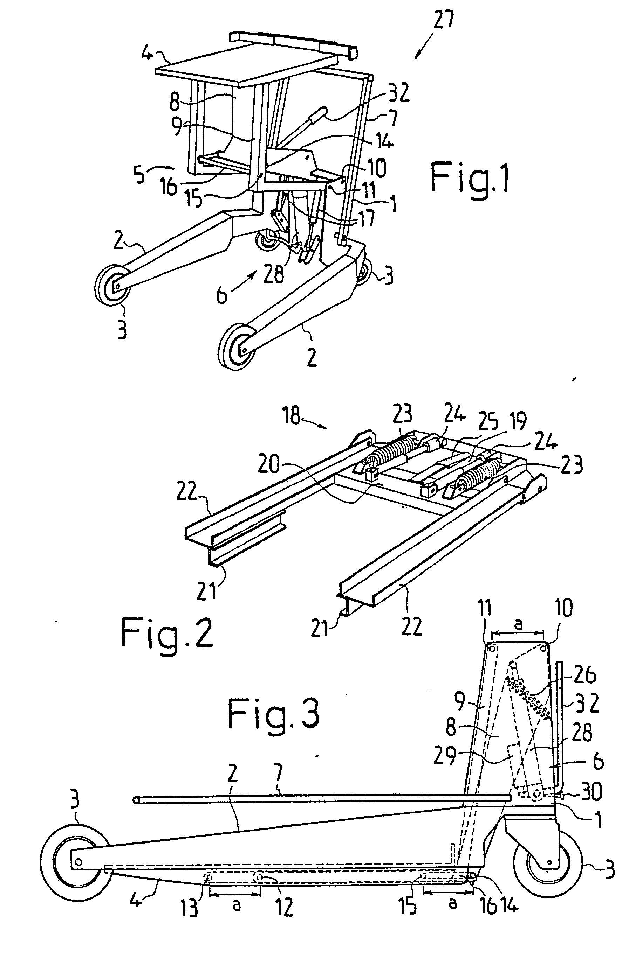

The moving and lifting member according to this invention shown in Figure 1 consists of a frame 1, frame bearing beams 2, wheels attached to the ends of the frame bearing beams and below the frame, a lifting platform 4 and lifting member connecting said platform to the frame. The lifting members include a bar or tubelike structure which has been pivotally connected in an angle to the frame forming a lifting jib, and two pivotally connected beams forming an angleous structure and acting as support beams 9. In addition the lifting jib has been connected to the frame through a power member 6 which includes a lifting cylinder 28, a pumping member 29, a guiding ventile 30 and a crank bar 32. Moreover a handle 7 has been pivotally connected to the frame. The lifting jib and support beams have been connected pivotally to the frame through pivots 10 and 11 respectively. The support beams have been connected to the lifting jib pivotally through pivot supports 16. In addition the moving and lifting member comprises a gas spring 17 arranged to lift the frame 1 and the frame bearing beams to the vicinity of the lifting platform 4.

Figure 2 shows one loading- and lifting member 18 according to this invention, which member can be connected to a van, trailer or loading platform. It includes a body member 19 which can be connected to the above mentioned objects, and a bridge member 20 pivotally connected to the body member. The bridge member comprises two trucklike projections 22 below which ends tracklike fastening members 21 have been connected. Balancing springs 23, damping elements 24 and a clamping device 25 have been connected between the body member and bridge member in order to fix the latter rigidly to the former.

Figure 3 shows a sidewise view of the device according to this invention. A generating power member 6 is connected to the lifting jib 8, the purpose of said power member being to lift and lower the platform 4. The power member consists of a lifting cylinder 28 connected to the frame 1, a pumping member 29, a guiding ventile 30 and a crank bar 32. In addition a spring 26 has been connected to the frame 1 and the lifting jib 8. The purpose of this spring is to pull the frame 1 and the frame bearing beams 2 to the neighbourhood of the lifting members 5. The lifting jib 8 has been pivotally mounted to the frame 1 through pivots 10 and the support beams 9 have been connected to the said frame through pivots 11. The axis of rotation of the pivots 10 and 11 are parallel with respect to each other and at a distance a apart from each other. In a modification of the invention shown in Figure 3 the axis of rotation of the pivots 10 and 11 are also in the same ground plane. The lifting jib and support beams have been pivotally connected to the lifting platform 4 through pivots 12 and 13 which axis of rotation are also at the distance 'a' apart from each other in the same ground plane. The lifting jib and support beams have been pivot-mounted to each other with a pivot support 16 from corners of the beams. The pivot support 16 includes a pivot 14 for the lifting jib and a pivot 15 for the support beam. The axis of rotation of these pivots are also parallel to each other and at a distance (a) apart. The axis of rotation of the pivots 14 and 15 are also situated also in the same ground plane.

The planes in which the three pairs of central axes of the pivots 10, 11, 12, 13, 14 and 15 lie are also parallel to each other and in the shown adaptation they are also lateral. The axis of rotation of the six pivots are parallel and the pairs of axis are at a distance (a) apart from each other. The planes on which the pairs of rotating axis lie can also be positioned in a non-lateral fashion as long as all the three planes are parallel w.r.t. each other. A handle 7 has also been connected pivotally to the frame (1), which handle can, thus, be turned forward into a parallel position w.r.t. the frame bearing beams (2).

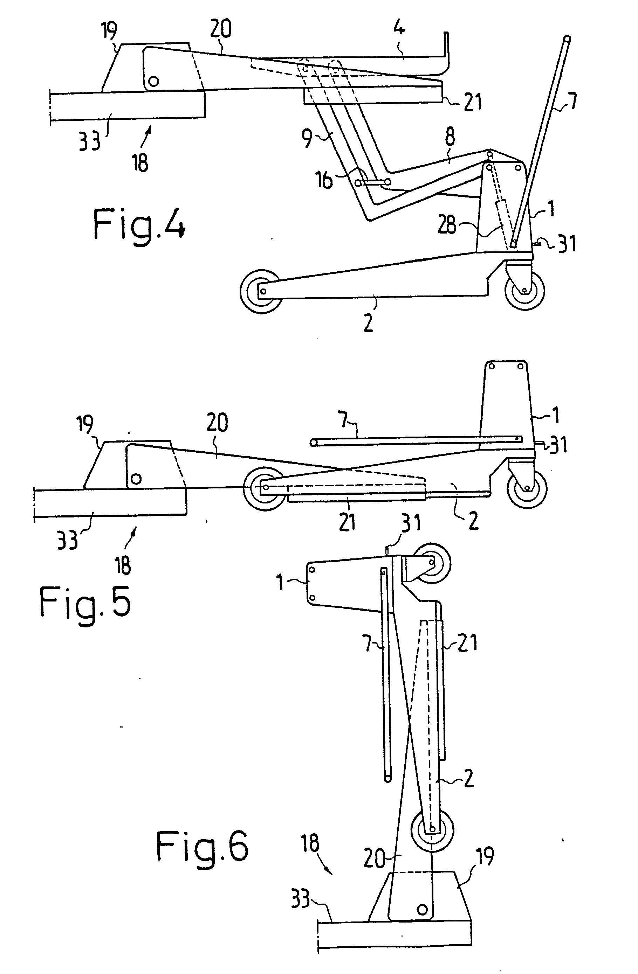

Figures 4 to 6 clarify the operation of the moving and lifting arrangement according to this invention during the various steps associated with goods handling. The commodities loaded on a loading platform or pallet are fetched with the moving and lifting member 27 and brought to the vicinity of the loading and transportation member 18 which has been fixed to the platform. Pumping on the lifting cylinder 28 through the crank bar 32 causes the consignment to rise above the level of the bridge member 20. Then the moving and lifting member is pushed between the projections 22 and the consignment is lowered on the barlike projections 22. Thus, the consignment situated above the tracklike projections can be pushed on the platform 33.

Afterwards the moving and lifting member 27 is pulled away from between the projections 22 and the lifting platform 4 is lowered by the aid of the guiding ventile 30 to the level of the tracklike fastening members 21. The lifting member is then again pushed below the bridge member so that the loading platform is clamped to the fastening members 21. Then the work member 17 or 26, is released by the guiding ventile 30 and thus pulls the frame up to the same level as the loading platform. At the same time the handle 7 can be turned above the loading platform into a mainly parallel position to said platform. By opening the clamping device 25 the lifting member can be lifted from a lifting handle 31 vertically above the platform 33. The lifting action is eased by balancing springs 23 and a damping element 24 the latter acting as to damp the otherwise too violent movements caused by the former.

The procedure during unloading is exactly the opposite. The clamp of the vertical loading and transportation member is opened and the arrangement is turned to the lateral position. Closing the guiding ventile 30 and pumping on from the crab bar lowers the lifting member to the ground level. The platform 4 is dismantled from its tracklike fastening members 21 and the consignment brought on the bridge member 20 can be lifted by the lifting platform and lowered by releasing from the guiding ventile 30. After which the consignment can be moved to the desired point.

The moving and lifting member 27 according to this invention can be used separately without the loading and transportation member 18 in various moving and lifting duties. The lifting member can also be scaled to the desired size according to the desired lifting power and lifting height. The objects of the hydraulic part of the lifting gear can be realized also by other means. The loading and transportation member can also be variously constructed and characteristic to it is that the consignment can be brought to it by the moving- and lifting member 27 and that the moving- and lifting member can be lifted with it for transportation in a small compact form. The arrangement according to this invention can also be mounted for example to sidewise loadable vehicles and to various trailers or loading platforms.

**Claims**

1. Lifting member for a lifting arrangement comprising a lifting jib (8) connected at one end to the frame (1) of the lifting arrangement through a pivot (10) and at another end to a lifting platform (4) through a pivot (12), the lifting jib being formed of two pieces connected rigidly in an angle with respect to each other, a power generating member (6) connected to the lifting jib (8); and a support beam (9) connected at one end to the frame (1) through a pivot (11) and at another end to the lifting platform (4) through a pivot (13), characterized in that the support beam (9) is formed of two pieces connected rigidly in an angle with respect to each other; and that the lifting member comprises a pivot support (16) connecting the lifting jib (8) and the support beam (9) through pivots (14 and 15) to each other between the angled portions of said jib and said beam.

2. A lifting member according to claim 1, characterized in that the lifting member comprises two support beams (9), one on each side of the lifting jib (8).

**Patentansprüche**

1. Hebegerät für eine Hebeanordnung, das einen an einem Ende mit dem Rahmen (1) der Hebeanordnung durch einen Gelenkzapfen (10) und an dem anderen Ende mit einem Hubtisch (4) durch einen Gelenkzapfen (12) verbundenen und aus zwei Teilen, die fest miteinander in einen Winkel verbunden sind, geformten Hubausleger (8) eine mit dem Hubausleger (8) verbundene Antriebseinrichtung (6) und einen Stützträger (9) umfaßt, der an einem Ende mit dem Rahmen (1) über einen Gelenkzapfen (11) und an dem anderen Ende mit dem Hubtisch (4) über einen Gelenkzapfen (13) verbunden ist, dadurch gekennzeichnet, daß der Stützträger (9) aus zwei Stücken geformt ist, die fest in einem Winkel zueinander verbunden sind und daß das Hubgerät eine Gelenkstütze (16) umfaßt, die den Hubausleger (8) und den Stützträger (9) über Zapfen (14 und 15) miteinander zwischen den Winkelteilen des Hubauslegers (8) und Stützträgers (9) verbindet.

2. Hebegerät nach Anspruch 1, dadurch gekennzeichnet, daß das Hebegerät zwei Stützträger (9) umfaßt, einen an jeder Seite des Hubauslegers (8).

**Revendications**

1. Elément de levage pour un agencement de levage comprenant une grue de levage (8) reliée à une extrémité au châssis (1) de l'agencement de levage par l'intermédiaire d'un pivot (10) et à une autre extrémité, à une plate-forme de levage (4) par l'intermédiaire d'un pivot (12), la grue de levage étant constituée de deux pièces reliées entre elles d'une manière rigide, en formant un angle entre elles, un élément générateur de puissance (6) relié à la grue de levage (8); et une poutre de support (9) reliée à une extrémité au châssis (1) par l'intermédiaire d'un pivot (11) et à une autre extrêmité, à la plate-forme de levage (4) par l'intermédiaire d'un pivot (13), caractérisé en ce que la poutre de support (9) est constituée de deux pièces reliées d'une manière rigide en formant un angle; et que l'élément de levage comprend un support de pivot (16) reliant la grue de levage (8) et la poutre de support (9) par l'intermédiaire de pivots (14 et 15) entre elles, entre les parties d'angle de ladite grue et de ladite poutre.

2. Elément de levage selon la revendication 1, caractérisé en ce que l'élément de levage comprend deux poutres de support (9), une de chaque côté de la grue de levage (8).

Fig.1

Fig.2

Fig.3

Fig.4

Fig.5

Fig.6